# EUROPEAN PATENT APPLICATION

(11) **EP 4 518 251 A1**
(43) Date of publication of application: **05.03.2025**
(21) Application number: 24195727.3
(22) Date of filing: 21.08.2024
(51) Int. Cl.: H04L 9/40, H04L 9/32, H04L 9/00

(54) **MANAGING VERIFIABLE CREDENTIAL LINKAGES TO DENOTE RELATIONSHIPS**

(30) Priority: 30.08.2023 US 202318458381
(71) Applicant: American Express Travel Related Services Co., Inc., New York, NY 10285-4900 (US)
(72) Inventor: SIMHARAGHU, Mukund Shankar, New York 10285 (US)
(74) Representative: Reddie & Grose LLP

(57) **Abstract**

Disclosed are approaches for managing verifiable credential linkages or relationships. An exemplary system of the present disclosure comprises a computing device (104) comprising a processor (702) and a memory (708); and machine-readable instructions stored in the memory (708) that, when executed by the processor (702), cause the computing device (104) to at least: receive a request from a user device (101) of a first user to issue a delegation verifiable credential that indicates that the first user has a delegation relationship with a second user; request confirmation from the second user of the delegation relationship with the first user; after receiving confirmation, issue a new verifiable credential for the first user, wherein the new verifiable credential includes a delegation attribute value that describes the delegation relationship between the first user and the second user; and transmit the new verifiable credential to the user device (101) of the first user. Other systems, methods, and computer-readable mediums are also presented.

## Description

### CROSS-REFERENCE TO RELATED APPLICATIONS

This application claims the benefit of and priority to U.S. Patent Application No. 18/458,381, filed on August 30, 2023, entitled "MANAGING VERIFIABLE CREDENTIAL LINKAGES TO DENOTE RELATIONSHIPS," the contents of which are incorporated by reference in their entirety herein.

### BACKGROUND

Users often are required to verify characteristics about themselves when requesting services. For example, a user may need to verify characteristics about their identity, such as their age or qualifications, when requesting services from an organization. To do so, a user can be provided a verifiable credential that contains information about the individual person. However, there are no current constructs that allow for the user to link or establish a relationship with another user, where this relationship is defined in a verifiable credential of the user.

### BRIEF DESCRIPTION OF THE DRAWINGS

Many aspects of the present disclosure can be better understood with reference to the following drawings. The components in the drawings are not necessarily to scale, with emphasis instead being placed upon clearly illustrating the principles of the disclosure. Moreover, in the drawings, like reference numerals designate corresponding parts throughout the several views.
FIG. 1 is a drawing of an exemplary embodiment of a verifiable credential management system of the present disclosure.
FIG. 2 shows an exemplary structure of a delegation verifiable credential in accordance with embodiments of the present disclosure.
FIGS. 3-5 show a flow or sequence diagram illustrating an execution of a process for issuing a verifiable credential having a delegation attribute in accordance with various embodiments of the present disclosure.
FIG. 6 shows a flow or sequence diagram illustrating an execution of a process for verifying a verifiable credential having a delegation attribute in accordance with various embodiments of the present disclosure.
FIG. 7 is a block diagram of an example computer system that can be used to implement various embodiments of the present disclosure.

### DETAILED DESCRIPTION

Disclosed are various approaches for managing verifiable credential linkages or relationships including those denoting linkages amongst verifiable credentials of different users. Accordingly, methods and systems of the present disclosure enable linkages between verifiable credentials (VCs) of entities, such that one entity can define a relationship with another user, including the delegation of an authority or right to perform some function/activity to another entity. Non-limiting examples of delegation of rights can involve power of attorney relationships, where one entity (delegator) delegates an authority to act in one or more legal or financial matters to another entity (delegatee), among others. Another non-limiting example is a parent-child relationship, where the authority to act on behalf of a minor child is bestowed upon a parent and is reflected in the respective verifiable credentials of the parent and child entities. In some instances, a third-party could cause the relation between a delegator and delegatee to be created, such as when a guardian or conservator could be provided with the authority to act on behalf of a ward by a third-party (*e.g*., a judge) and the relationship is reflected in the respective verifiable credentials of the guardian or conservator and the ward. In accordance with various embodiments, a life cycle of the delegation of rights (or other type of defined relationship amongst the entities) can be managed using methods and systems of the present disclosure.

Correspondingly, in the following discussion, a general description of the system and its components is provided, followed by a discussion of the operation of the same. Although the following discussion provides illustrative examples of the operation of various components of the present disclosure, the use of the following illustrative examples does not exclude other implementations that are consistent with the principals disclosed by the following illustrative examples.

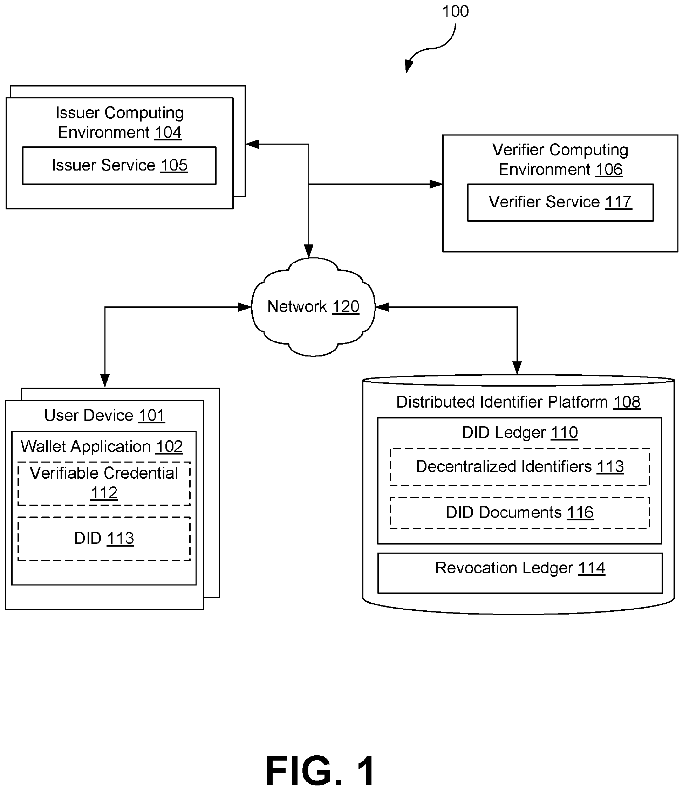

FIG. 1 gives an overview of an exemplary embodiment of a verifiable credential management system 100 of the present disclosure. The system 100 comprises a user device 101 (*e.g.,* a mobile smartphone, tablet, *etc.* having a digital wallet application 102), an issuer computing environment 104 (*e.g*., server computer platform), a verifier computing environment 106 (*e.g*., server computer platform), a distributed identifier (DID) ledger platform 108 (*e.g.*, a blockchain or distributed ledger network) having one or more distributed identifier ledgers 110, 114, and a computer network 120. Accordingly, a user can have a user device (*e.g.*, mobile smart phone) with a digital wallet application 102 that interacts with the issuer computing environment 104, verifier computing environment 106, and/or DID ledger platform 108. As such, the user may have a decentralized identifier (DID) 113 on a decentralized identity (DID) ledger 110 of the verifiable credential management system 100, which can be used to issue verifiable credentials (VCs) 112 by one or more issuer computing environments 104 using an issuer service 105 over the computer network 120.

The DID ledger platform 108 can represent an immutable, append only, eventually consistent distributed data store formed from a plurality of nodes that maintain duplicate copies of data. An illustrative example of a DID ledger platform 108 is a blockchain. The nodes of a blockchain network can use a variety of consensus protocols to coordinate the writing of data written to the DID ledger 110. Examples of blockchain networks include the ETHEREUM network, the CARDANO network, the SOLANA network, the TEZOS network, *etc.*

Therefore, in various embodiments, the verifiable credential management system 100 of the present disclosure leverages blockchain and/or distributed ledger technology and utilizes decentralized identifiers (DIDs) for users (entities) of the system. A benefit of the decentralized identity model over centralized and federated models is that the user remains in complete control of identity, including being able to prove some characteristic (*e.g.*, power of attorney rights), without actually disclosing actual personal data (i.e., birthdate).

In contrast with conventional identification systems, systems and methods of the present disclosure enable a user to link or establish a relationship with another user, where this relationship is defined in the verifiable credential of the user. In accordance with embodiments of the present disclosure, a decentralized identity (DID) 113 is created by a user or entity and is provided to a service where the user chooses to interact. In various embodiments, a decentralized identifier (DID) 113 comprises a globally unique identifier, as defined by the W3C DID specification, which is associated with or points to a DID document 116 in the form did:<DID method>:<method-specific identifiers The DID method is a reference to a specific distributed ledger or network and the method-specific identifier allows to resolve the DID within that reference. Given a DID 113, one can retrieve the referenced DID document 116, such as one would do with an URL to locate, *e.g.,* a web resource. A DID document 116 describes public keys, service endpoints, and other metadata associated with a DID 113.

In general, the verifiable credential management system 100 enables the creation and issuance of verifiable credentials 112 for users (holders) of user devices 101 by issuer computing environment(s) 104, where the verifiable credentials 112 contain claims or pieces of information about characteristics or attributes of an individual user/entity directed to at least one delegation relationship with another individual user/entity. Thus, systems and methods of the present disclosure enable and manage linkages between DIDs 113 and VCs 112 thereby allowing one entity to delegate its authority to another entity and to manage the life cycle of the delegation. It is noted that, currently, there is no way for a user or entity to delegate their authority or actions to another user or entity via the decentralized identity ecosystem.

In accordance with the present disclosure, the delegation relationship can refer to a designation that the holder of the verifiable credential 112 has authorized and/or entrusted another individual user to carry out a task, responsibility, or benefit originally belonging to the holder of the verifiable credential 112. In this situation, the holder of the verifiable credential 112 is the delegator and the other individual user is the delegatee, in that the holder is delegating a right, responsibility, task, or benefit to the other individual user. Conversely, the delegation relationship can also refer to a designation that the holder of the verifiable credential 112 has accepted to be the one to carry out a task, responsibility, or benefit originally belonging to another individual user of the verifiable credential 112. In this situation, the holder of the verifiable credential 112 is the delegatee and the other individual user is the delegator, in that the holder is accepting a right, responsibility, task, or benefit from the other individual user. Non-limiting examples of delegation of rights include power of attorney delegations, where one person delegates a legal or financial authority to another person. Other types of relationships that can involve delegation or rights, include parent/child relationships, where a parent may act on behalf of a minor child in certain arrangements and contexts, or an adult child may act on behalf of an elderly or impaired parent in certain arrangements and contexts.

Referring back to FIG. 1, a user may store one or more verifiable credentials 112 in the user's digital wallet 102, where the verifiable credential 112 is issued by the issuer computing environment 104 based on a decentralized identifier (DID) 113 of the user. Thus, the user can be referred to as a verifiable credential holder, such that the user receives an issued verifiable digital credential in which the user can later share elements of the stored credentials or can create a cryptographic proof that can be used in response to a request, without revealing the underlying data.

In accordance with the present disclosure, the issuer computing environment 104 is associated with an issuer entity (person, organization, business, *etc.)* that issues verifiable digital credentials to the user's digital wallet 102. Accordingly, the issuer computing environment 104 may be associated with a government entity, a financial bank, a transaction account issuer, or another type of issuing entity. In addition to including delegation information, the verifiable credentials 112 may include one or more of the following data: physical appearance, job title, name, email address, physical home address, social security number, age, birthplace, birth date, address history, employment information, employment history, college or school degree, graduation date, college or school history, utilities, financial information, home ownership, employment information, *etc.* This list is not exhaustive. Other data may be included with the verifiable credentials 112 that can provide and describe the identity of the user/holder. In this case, the verifiable credential is issued to the user and is stored in the user's digital wallet 102.

The digital wallet 102 can create, store, negotiate, exchange, share, and/or otherwise employ many different digital identification or access control data elements. Such data elements may include decentralized identifiers (*e.g*., DIDs), public/private keypairs, secret keys, verifiable claims, computed (cryptographic) proofs, attestations, credentials, access control (login) credentials, cryptographic tokens, user identifiers, *etc.*

In the context of FIG. 1, a verifiable credential (VC) 112 is created and issued by the issuer computing environment 104 and is sent to a receiving user or entity (*e.g*., via user's digital wallet application 102). The VC 112 generally contains a set of claims (*e.g*., pieces of information) about attributes of the receiving user/entity, *e.g.,* name, birth date, grade, ID, or other information the issuer wants to attribute to the receiving user/entity. When providing a proof of its identity or one or more identity characteristics to a verifier computing environment 106, a user can present a subset of the attribute values in a form of verifier credential referred to as a verifier presentation. Thus, the verifier presentation is data derived from one or more verifiable credentials that is shared with a verifier computing environment 106 and allows the user to present only a subset of attribute values, such as revealing the birth date attribute without the name attribute, to the verifier computing environment 106.

In FIG. 1, the user may present its verifiable credential 112 (as proof of its identity or proof of an identity characteristic) to the verifier computing environment 106. Structurally, a verifiable credential (VC) 112 is a form of machine-readable credential that is bound to a DID 113 in a DID document 116 and thus linked to an identity. As such, in various embodiments, the verifiable credential 112 comprises a digitally signed cryptographic set of data (claims) containing information about a person, entity, or thing, as defined by the World Wide Web Consortium (W3C) Verifiable Credentials Data Model specification.

In various embodiments, a verifier can submit a proof request to a user or holder's wallet application 102 asking for credentials or a proof of identity of the user. In its simplest form, a proof request is a request for data, but could also be a request to prove that a person has a particular identity characteristic, such as proof that the person is at least 21 years of age or has been delegated authority to act as a power of attorney on behalf of another user/entity. Accordingly, cryptographic proof can be presented by the holder/user to the verifier in response to a proof request and is used by the verifier to check that signatures are correct. In some cases, the claim from the verifiable credential 112 can be presented in response to a proof request, and in other cases, a Zero Knowledge Proof (ZKP; *e.g.,* zk-SNARKs) can be involved that demonstrates a claim is true, without presenting the actual data behind the proof.

After receiving cryptographic proofs or credential elements from the user/holder, the verifier computing environment 106 utilizes a verifier service 117 to verify the presented data/proof by checking a decentralized identifier platform 108 to ensure the digital signatures of the issuer and holder are valid and that the credentials have not been revoked. For example, a verifier computing environment 106 may check a decentralized identifier (DID) ledger 110 to authenticate the issuer and holder and check a revocation ledger 114 to determine whether a delegation relationship within a verifiable credential 112 is still valid. As such, the verifier may know with certainty which issuer computing environments 104 are attesting to the verifiable credential 112 by confirming an associated digital signature against the DID ledger 110. The DID ledger 110 may verify identifiers from the issuer, the user/holder, and verifiable credential schemas. An exemplary DID ledger 107 that may be utilized is the Sovrin blockchain ledger provided by the SOVRIN FOUNDATION. However, other blockchains or similar data structures may also be used in the various embodiments of the present disclosure.

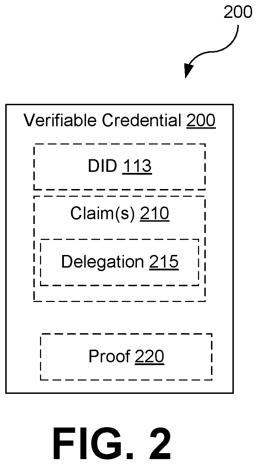

Generally, a verifiable credential schema is a machine-readable file containing a set of attributes that can be used for the claims on a credential. Schemas may be written to a blockchain ledger by the schema author. For example, a schema for designating user rights or permissions may include a definition of attributes such as expiration date, delegation type, specified delegated actions, *etc.* In an exemplary embodiment, as shown in FIG. 2, a delegation verifiable credential 200 may take the form of a verifiable credential 112 that has credential metadata, such as DID(s) for the holder and/or issuer of the credential, expiry date, a public key etc. and includes identity attribute values specified as claims 210, such as those related to a user's name, address, age, date of birth, *etc.,* in addition to an additional delegation attribute value 215 having a delegator section, a delegatee section, and a delegation type section, where the delegator section in the verifiable credential can specify a DID 113 of the user who is delegating a right or benefit, the delegatee section can include a DID 113 of the user who is receiving the right or benefit, and the delegation type section includes a description of the type of delegation or assumption of rights that is being carried out (*e.g.,* a power of attorney, a voting proxy, membership use authorization, right to carry out a specific action, *etc.*)*.* Additionally, the verifiable credential 200 may include a digital signature of the issuer computing environment 104 as proof 220 of veracity of the credential. Accordingly, a verifiable credential 112 may be defined in accordance with a registered verifiable credential schema that has been written to the blockchain ledger (*e.g.*, DID ledger 110) in the form of a DID document 116.

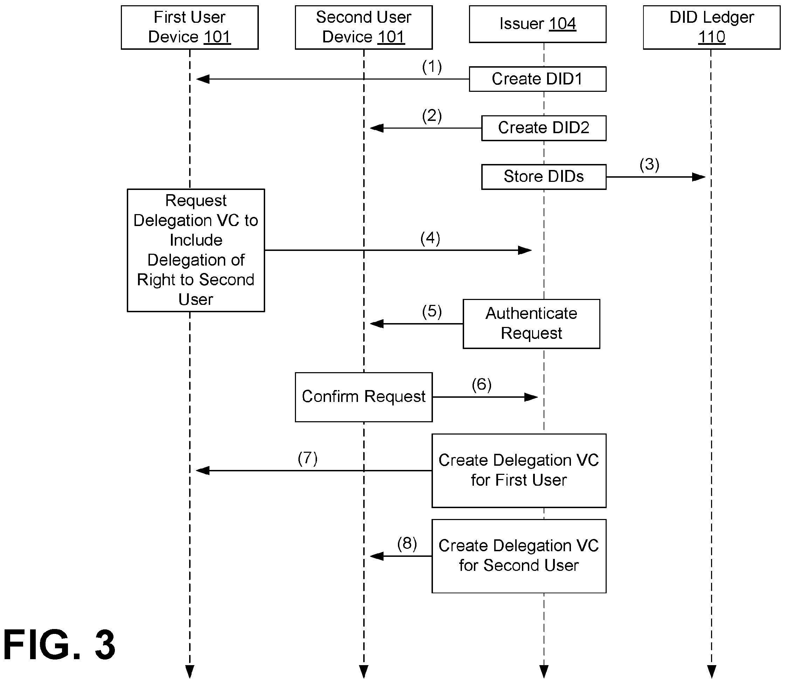

Referring now to FIG. 3, a flow or sequence diagram is provided that illustrates an execution of a process for issuing a verifiable credential 112 having a delegation attribute value 215 or claim within a verifiable credential management system 100. In the diagram, a first user device 101 is associated with a user in the role of a delegator and a second user device 101 is associated with a user in the role of a delegatee. In this example, the first user (delegator) wants to have the issuer computing environment 104 issue a verifiable credential that delegates an attribute characteristic of the first user (delegator) to the second user (delegatee), where the first user and the second user have not previously created individual decentralized identifiers.

Accordingly, as shown in sequence 1, the issuer computing environment 104 creates and issues a DID for the first user (referred to as DID1), where in this process wallet address information is provided to the issuer computing environment 104 by the first user. For example, the first user can have a user device 101 (*e.g.*, mobile smart phone) with a digital wallet application 102 that interacts with the issuer computing environment 104. As such, the first user may be issued a decentralized identifier (DID) 113 by the issuer computing environment 104. In accordance with embodiments of the present disclosure, the decentralized identity (DID) 113 is created by the issuer computing environment 104 on behalf of the first user. In various embodiments, the decentralized identifier (DID) 113 comprises a globally unique identifier, as defined by the W3C DID specification, which is associated with or points to a DID document 116 that is stored on a DID ledger 113, where the DID document 116 describes public keys, service endpoints, and other metadata associated with a DID 113.

In a similar manner, as shown in sequence 2, the issuer computing environment 104 can also create and issue a DID for the second user (referred to as DID2) where in this process wallet address information is provided to the issuer computing environment 104 by the second user. Thus, the second user can have a user device 101 (*e.g.*, mobile smart phone) with a digital wallet application 102 that interacts with the issuer computing environment 104. As such, the second user may be issued a decentralized identifier (DID) 113 by the issuer computing environment 104.

As shown in sequence 3, the issuer computing environment 104 stores the DIDs that it creates in the DID ledger 110 of a DID ledger platform 108, such as DID1 and DID2. The DID ledger platform 108 can represent an immutable, append only, eventually consistent distributed data store formed from a plurality of nodes that maintain duplicate copies of data. An illustrative example of a DID ledger platform 108 is a blockchain. The nodes of a blockchain network can use a variety of consensus protocols to coordinate the writing of data written to the DID ledger 110, where one type of data written to the DID ledger 110 includes DIDs 113 from the issuer computing environment 104.

In this example, the first user (delegator) also wants to have the issuer computing environment 104 issue a verifiable credential that delegates an attribute characteristic of the first user (delegator) to the second user (delegatee). Therefore, the wallet application 102 of the first user requests a delegation attribute value to be included in a verifiable credential (also referred to as a delegation VC) for the first user and the second user, as shown in sequence 4. In an exemplary embodiment, a delegation verifiable credential 200 may take the form of a verifiable credential 112 that has credential metadata, such as DID(s) for the holder and/or issuer of the credential, expiry date, a public key etc. and includes identity attribute values specified as claims 210, such as those related to a user's name, address, age, date of birth, *etc.,* in addition to an additional delegation attribute value 215 having a delegator section, a delegatee section, and a delegation type section, where the delegator section in the verifiable credential can specify a DID 113 of the user who is delegating a right or benefit, the delegatee section can include a DID 113 of the user who is receiving the right or benefit, and the delegation type section includes a description of the type of delegation or assumption of rights that is being carried out (*e.g.*, a power of attorney, a voting proxy, membership use authorization, right to carry out a specific action, *etc.*)*.* Additionally, the verifiable credential 200 may include a digital signature of the issuer computing environment 104 as proof 220 of veracity of the credential. Accordingly, a verifiable credential 112 may be defined in accordance with a registered verifiable credential schema that has been written to the blockchain ledger (*e.g.*, DID ledger 110) in the form of a DID document 116 and may be issued by the issuer computing environment 104 in accordance with the registered verifiable credential schema.

After receiving the delegation request from the first user, the issuer computing environment 104 can request or invite (*e.g.*, via a trust spanning protocol like DIDComm) the second user to authenticate that they accept or approve of the delegation request from the first user, as shown in sequence 5. For example, the issuer computing environment 104 can send a message to the wallet 102 of the user device 101 of the second user and ask the second user to authenticate the delegation request, where the issuer computing environment 104 has the wallet address information for the second user from their previous interactions, including the issuing of the DID in sequence 2. Correspondingly, the second user can confirm that they accept or approve of the delegation request from the first user, as shown in sequence 6, by replying to the message sent by the issuer computing environment (in sequence 5).

After receiving confirmation from the second user, the issuer computing environment 104 may then create and issue a new verifiable credential 112 having a delegation attribute value for the first user and send the new verifiable credential 112, which is also referred to as a delegation verifiable credential, for storage on the user device 101 of the first user, as shown in sequence 7. In an exemplary embodiment, as shown in FIG. 2, such a delegation verifiable credential 200 may take the form of a verifiable credential 112 that has credential metadata in addition to a delegation attribute value 215 having a delegator section, a delegatee section, and a delegation type section, where the delegator section in the verifiable credential can specify a DID1 of the first user who is delegating a right or benefit, the delegatee section can include a DID2 of the second user who is receiving the right or benefit, and the delegation type section includes a description of the type of delegation or assumption of rights that is being carried out. Additionally, the verifiable credential 200 may include a digital signature of the issuer computing environment 104 as proof 220 of veracity of the credential. To send the verifiable credential 112, the issuer computing environment 104 can utilize wallet address information for the first user from their previous interactions, including the issuing of the DID1 in sequence 1.

The issuer computing environment 104 may also create and issue a new verifiable credential 112 having a delegation attribute value for storage on the user device 101 of the second user, as shown in sequence 8. Accordingly, the delegation verifiable credential 200 may take the form of a verifiable credential 112 that has credential metadata in addition to a delegation attribute value 215 having a delegator section, a delegatee section, and a delegation type section, where the delegator section in the verifiable credential can specify a DID1 of the first user who is delegating a right or benefit, the delegatee section can include a DID2 of the second user who is receiving the right or benefit, and the delegation type section includes a description of the type of delegation or assumption of rights that is being carried out. Additionally, the verifiable credential 200 may include a digital signature of the issuer computing environment 104 as proof 220 of veracity of the credential. To send the verifiable credential 112, the issuer computing environment 104 can utilize wallet address information for the second user from their previous interactions, including the issuing of the DID2 in sequence 2.

If necessary, either party can request the delegation attribute to be revoked or remove from their verifiable credential by submitting a revocation request to the issuer computing environment 104 (from a wallet application 102). Thus, the issuer computing environment 104 can issue new verifiable credentials to the first and second users that remove the delegation attribute. Thus, the new verifiable credential schema can be added to the DID document 116 that is stored on the DID ledger 110. Additionally, in various embodiments, a revocation ledger 114 can be updated to show the revocation of the delegation attribute from the verifiable credentials of the first and seconds users.

In certain embodiments, a delegation attribute may have certain conditions upon which the delegation attribute will be terminated, such as a set expiration date or an occurrence of an activity that will trigger revocation or termination. For example, if a user has previously assigned or delegated a power of attorney to a first user and later names a second user as having the power of attorney, the naming of the second user may automatically revoke the power of attorney previously associated with the first user.

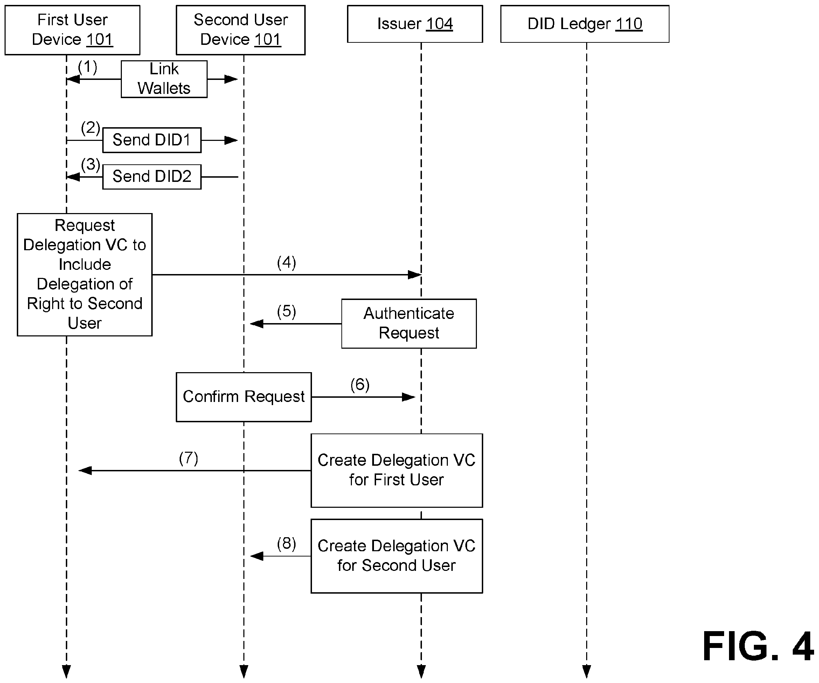

Referring now to FIG. 4, a flow or sequence diagram is provided that illustrates an execution of a process for issuing a verifiable credential 112 having a delegation attribute value (delegation VC 200) within a verifiable credential management system 100 for users with pre-existing decentralized identifiers that have being issued by the same issuer. In the diagram, a first user device 101 is associated with a user in the role of a delegator and a second user device 101 is associated with a user in the role of a delegatee. Accordingly, a decentralized identifier for the first user (delegator) is referred to as DID1 and a decentralized identifier for the second user (delegatee) is referred to as DID2. In this example, the first user (delegator) wants to have the issuer computing environment 104 to issue a new verifiable credential that delegates an attribute characteristic of the first user (delegator) to the second user (delegatee). To do so, the wallet application 102 of the first user is linked to the wallet application 102 of the second user, as indicated by sequence number 1. For example, in the World Wide Web Consortium (W3C) Verifiable Credentials Data Model specification, there is a feature for linking digital wallets where a QR code or other representation of a digital wallet public address (*e.g*., alphanumeric string) can be provided to another requesting wallet (via proximity scanning or by sending the public address over a communication network, such as email or text message). After linking the digital wallets, the wallet applications 102 can now communicate with one another and send each other their DIDs, as shown in sequences 2 and 3.

For example, in sequence 2, the first user device of the first user can send their identification information DID1 to the second user device of the second user using a trusted messaging protocol (*e.g*., DIDComm) between the digital wallet applications of the respective user devices.

Correspondingly, in sequence 3, the second user device of the second user can share their identification information DI2 to the first user device of the first user using a trusted messaging protocol (*e.g*., DIDComm) between the digital wallet applications of the respective user device.

In this example, the first user (delegator) wants to have the issuer computing environment 104 to issue a verifiable credential that delegates an attribute characteristic of the first user (delegator) to the second user (delegatee). Therefore, the wallet application 102 of the first user device 101 requests a delegation attribute to be included in a delegation verifiable credential 200 for the first user and the second user, as shown in sequence 4. In an exemplary embodiment, a delegation verifiable credential 200 may take the form of a verifiable credential 112 that has credential metadata, such as DID(s) for the holder and/or issuer of the credential, expiry date, a public key etc. and includes identity attribute values specified as claims 210, such as those related to a user's name, address, age, date of birth, *etc.,* in addition to an additional delegation attribute value 215 having a delegator section, a delegatee section, and a delegation type section, where the delegator section in the verifiable credential can specify a DID 113 of the user who is delegating a right or benefit, the delegatee section can include a DID 113 of the user who is receiving the right or benefit, and the delegation type section includes a description of the type of delegation or assumption of rights that is being carried out (*e.g.*, a power of attorney, a voting proxy, membership use authorization, right to carry out a specific action, *etc.*)*.* Additionally, the verifiable credential 200 may include a digital signature of the issuer computing environment 104 as proof 220 of veracity of the credential. Accordingly, a verifiable credential 112 may be defined in accordance with a registered verifiable credential schema that has been written to the blockchain ledger (*e.g.*, DID ledger 110) in the form of a DID document 116 and may be issued by the issuer computing environment 104 in accordance with the registered verifiable credential schema. In various embodiments, the schema for the newly created delegation VC 200 will also be included in a DID document 116 that is stored on the DID ledger 110, where the DID document 116 is linked to the respective DIDs 113 of the first user and the second user.

After receiving the delegation request from the first user, the issuer computing environment 104 can request or invite (*e.g.*, via a trust spanning protocol, such as DIDComm) the second user to authenticate or confirm that they accept or approve of the delegation request from the first user, as shown in sequence 5. For example, the issuer computing environment 104 can send a message to the wallet 102 of the user device 101 of the second user and ask the second user to authenticate the delegation request, where the issuer computing environment 104 has the wallet address information for the second user from their previous interactions, including the issuing of the DID in sequence 2. Correspondingly, the second user can confirm that they accept or approve of the delegation request from the first user, as shown in sequence 6, by replying to the message sent by the issuer computing environment (in sequence 5).

After receiving confirmation from the second user, the issuer computing environment 104 may then create and issue a new verifiable credential 112 having a delegation attribute value for the first user and send the new verifiable credential 112, which is also referred to as a delegation verifiable credential, for storage on the user device 101 of the first user, as shown in sequence 7. In an exemplary embodiment, as shown in FIG. 2, such a delegation verifiable credential 200 may take the form of a verifiable credential 112 that has credential metadata in addition to a delegation attribute value 215 having a delegator section, a delegatee section, and a delegation type section, where the delegator section in the verifiable credential can specify a DID1 of the first user who is delegating a right or benefit, the delegatee section can include a DID2 of the second user who is receiving the right or benefit, and the delegation type section includes a description of the type of delegation or assumption of rights that is being carried out. Additionally, the verifiable credential 200 may include a digital signature of the issuer computing environment 104 as proof 220 of veracity of the credential. To send the verifiable credential 112, the issuer computing environment 104 can utilize wallet address information for the first user from their previous interactions, including the issuing of the DID1 in sequence 1.

The issuer computing environment 104 may also create and issue a new verifiable credential 112 having a delegation attribute value for storage on the user device 101 of the second user, as shown in sequence 8. Accordingly, the delegation verifiable credential 200 may take the form of a verifiable credential 112 that has credential metadata in addition to a delegation attribute value 215 having a delegator section, a delegatee section, and a delegation type section, where the delegator section in the verifiable credential can specify a DID1 of the first user who is delegating a right or benefit, the delegatee section can include a DID2 of the second user who is receiving the right or benefit, and the delegation type section includes a description of the type of delegation or assumption of rights that is being carried out. Additionally, the verifiable credential 200 may include a digital signature of the issuer computing environment 104 as proof 220 of veracity of the credential. To send the verifiable credential 112, the issuer computing environment 104 can utilize wallet address information for the second user from their previous interactions, including the issuing of the DID2 in sequence 2.

As previously discussed, either party can request the delegation attribute to be revoked or remove from their verifiable credential by submitting a revocation request to the issuer computing environment 104 (from a wallet application 102). Thus, the issuer computing environment 104 can issue new verifiable credentials to the first and second users that remove the delegation attribute. Accordingly, the updated schema for the new verifiable credentials can be added to the DID document 116 that is stored on the DID ledger 110. Additionally, in various embodiments, a revocation ledger 114 can be updated to show the revocation of the delegation attribute from the verifiable credentials of the first and seconds users.

In certain embodiments, a delegation attribute may have certain conditions upon which the delegation attribute will be terminated, such as a set expiration date or an occurrence of an activity that will trigger revocation or termination. For example, if a user has previously assigned or delegated a power of attorney to a first user and later names a second user as having the power of attorney, the naming of the second user may automatically revoke the power of attorney previously associated with the first user.

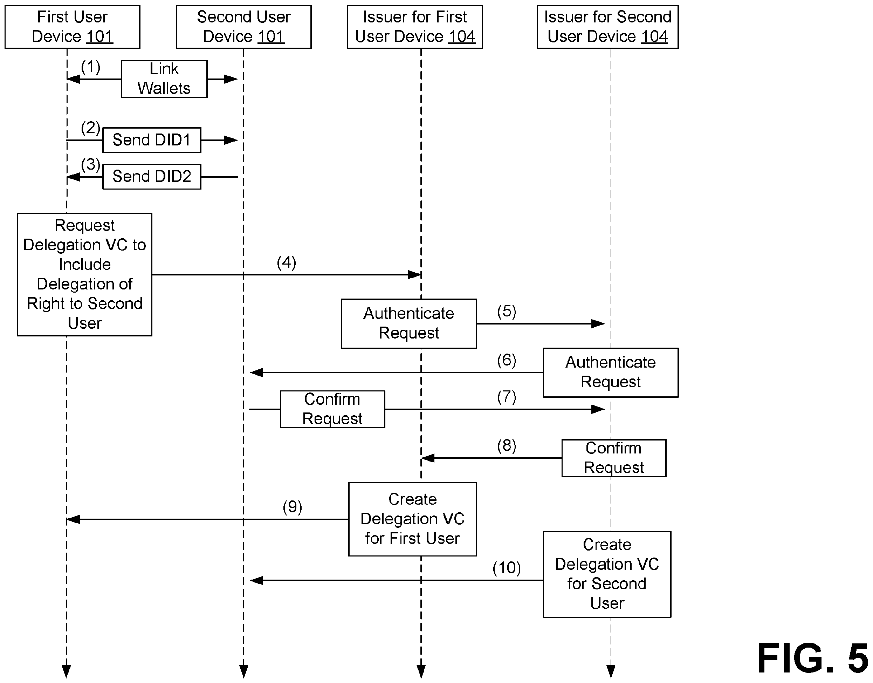

Referring now to FIG. 5, a flow or sequence diagram is provided that illustrates an execution of a process for issuing a verifiable credential having a delegation attribute within a verifiable credential management system 100 for users with pre-existing decentralized identifiers that have being issued by different issuers. In the diagram, a first user device 101 is associated with a user in the role of a delegator and a second user device 101 is associated with a user in the role of a delegatee. Accordingly, a decentralized identifier for the first user (delegator) is referred to as DID1 and a decentralized identifier for the second user (delegatee) is referred to as DID2.

In this non-limiting example, the first user (delegator) wants to have a first issuer computing environment 104 (that issued DID1 to the first user) and a second issuer computing environment 104 (that issued DID2 to the second user) to issue new verifiable credentials that delegate an attribute characteristic of the first user (delegator) to the second user (delegatee). For example, in the World Wide Web Consortium (W3C) Verifiable Credentials Data Model specification, there is a feature for linking digital wallets where a QR code or other representation of a digital wallet public address (*e.g*., alphanumeric string) can be provided to another requesting wallet (via proximity scanning or by sending the public address over a communication network, such as email or text message). After linking the digital wallets, the wallet applications 102 can now communicate with one another and send each other their DIDs, as shown in sequences 2 and 3.

For example, in sequence 2, the first user device of the first user can send their identification information DID1 to the second user device of the second user using a trusted messaging protocol (*e.g*., DIDComm) between the digital wallet applications of the respective user devices.

Correspondingly, in sequence 3, the second user device of the second user can share their identification information DI2 to the first user device of the first user using a trusted messaging protocol (*e.g*., DIDComm) between the digital wallet applications of the respective user device.

In this example, the first user (delegator) wants to have the issuer computing environment 104 for the first user to issue a verifiable credential that delegates an attribute characteristic of the first user (delegator) to the second user (delegatee) and to have the issuer computing environment 104 for the second user issue a verifiable credential that delegates an attribute characteristic of the first user (delegator) to the second user (delegatee).

Therefore, the wallet application 102 of the first user device 101 requests, to the issuer computing environment 104 for the first user, a delegation attribute value to be included in a verifiable credential 112 for the first user and the second user, as shown in sequence 4. In an exemplary embodiment, a delegation verifiable credential 200 may take the form of a verifiable credential 112 that has credential metadata, such as DID(s) for the holder and/or issuer of the credential, expiry date, a public key *etc.* and includes identity attribute values specified as claims 210, such as those related to a user's name, address, age, date of birth, *etc.,* in addition to an additional delegation attribute value 215 having a delegator section, a delegatee section, and a delegation type section, where the delegator section in the verifiable credential can specify a DID 113 of the user who is delegating a right or benefit, the delegatee section can include a DID 113 of the user who is receiving the right or benefit, and the delegation type section includes a description of the type of delegation or assumption of rights that is being carried out (*e.g.*, a power of attorney, a voting proxy, membership use authorization, right to carry out a specific action, *etc.*)*.* Additionally, the verifiable credential 200 may include a digital signature of the issuer computing environment 104 as proof 220 of veracity of the credential. Accordingly, a verifiable credential 112 may be defined in accordance with a registered verifiable credential schema that has been written to the blockchain ledger (*e.g.*, DID ledger 110) in the form of a DID document 116 and may be issued by the issuer computing environment 104 in accordance with the registered verifiable credential schema. In various embodiments, the schema for the newly created delegation VC 200 will also be included in a DID document 116 that is stored on the DID ledger 110, where the DID document 116 is linked to the respective DIDs 113 of the first user and the second user.

After receiving the delegation request from the first user device 101, the issuer computing environment 104 for the first user requests the issuer computing environment 104 for the second user to confirm that the second user accepts or authenticates the delegation request of the first user. For example, the issuer information for the second user is provided in the DID (DID2) of the second user, which is provided in the delegation request provided to the issuer computing environment 104 of the first user in sequence 4. Thus, using the issuer information for the second user, the issuer computing environment of the first user can send a message to the issuer computing environment for the second user (*e.g*., using a trusted messaging protocol, such as DIDComm) asking for the issuer computing environment of the second user to confirm that the second user authenticates or approves of the delegation request from the first user.

In sequence 6, the issuer computing environment for the second user can message the second user device 101 of the second user and ask the second user to authenticate the delegation request from the first user. Accordingly, the issuer computing environment 104 for the second user can send a message to the wallet 102 of the user device 101 of the second user and ask the second user to authenticate the delegation request, where the issuer computing environment 104 for the second user has the wallet address information for the second user from their previous interactions, including the initial issuing of the DID to the second user. Correspondingly, the second user can confirm that they accept or approve of the delegation request from the first user, as shown in sequence 7, by replying to the message sent by the issuer computing environment (in sequence 6).

Thus, after requesting and receiving confirmation from the second user, the issuer computing environment 104 for the second user can acknowledge the confirmation to the issuer computing environment 104 of the first user, as shown in sequence 8. For example, the issuer information for the first user is provided in the initial authentication request in sequence 5. Thus, using the issuer information for the first user, the issuer computing environment of the first user can send a message to the issuer computing environment for the first user (*e.g*., using a trusted messaging protocol, such as DIDComm) confirming that the second user authenticates or approves of the delegation request from the first user.

Next, each of the issuer computing environments may then create or update a new verifiable credential 112 having a delegation attribute for both the first user and the second user. Accordingly, after receiving confirmation from the issuer computing environment for the second user, the issuer computing environment 104 for the first user may create and issue a new verifiable credential 112 having a delegation attribute value for the first user and send the new verifiable credential 112, which is also referred to as a delegation verifiable credential, for storage on the user device 101 (via wallet application) of the first user, as shown in sequence 8.

Likewise, after sending confirmation to the issuer computing environment for the first user, the issuer computing environment 104 for the second user may create and issue a new verifiable credential 112 having a delegation attribute value for the second user and send the new verifiable credential 112, which is also referred to as a delegation verifiable credential, for storage on the user device 101 (via wallet application 102) of the second user, as shown in sequence 10.

In an exemplary embodiment, as shown in FIG. 2, such a delegation verifiable credential 200 may take the form of a verifiable credential 112 that has credential metadata in addition to a delegation attribute value 215 having a delegator section, a delegatee section, and a delegation type section, where the delegator section in the verifiable credential can specify a DID1 of the first user who is delegating a right or benefit, the delegatee section can include a DID2 of the second user who is receiving the right or benefit, and the delegation type section includes a description of the type of delegation or assumption of rights that is being carried out. Additionally, the verifiable credential 200 may include a digital signature of the issuer computing environment 104 as proof 220 of veracity of the credential. To send the verifiable credential 112, the issuer computing environment 104 for the first user can utilize wallet address information for the first user from their previous interactions, including an initial issuing of DID1 to the first user. Similarly, to send the verifiable credential 112, the issuer computing environment 104 for the second user can utilize wallet address information for the second user from their previous interactions, including an initial issuing of DID2 to the second user.

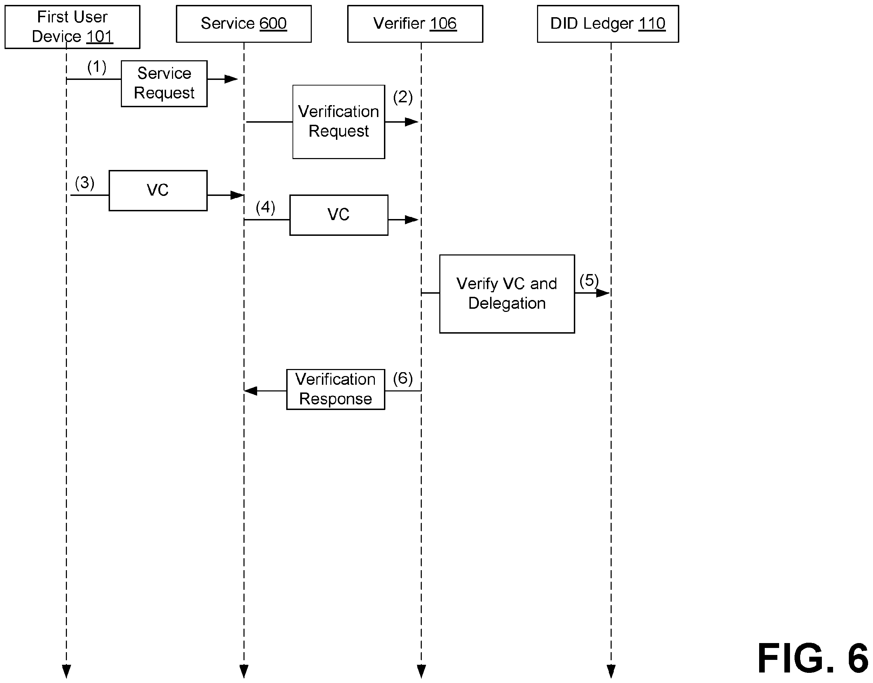

Referring now to FIG. 6, a flow or sequence diagram is provided that illustrates an execution of a process for verifying a verifiable credential having a delegation attribute within a verifiable credential management system 100. In the diagram, a first user device 101 is associated with a first user in the role of a delegator and a second user device 101 is associated with a second user in the role of a delegatee. Accordingly, in sequence 1, a second user makes a request to use a service 600 of a computing environment that is related to of the first user's attribute characteristics that have been delegated to the second user (*e.g*., membership rights, power of attorney duties, *etc.*)*.* One example of a service 500 could be an electronic commerce application that allows a user to purchaser goods or services with his or her user device 101. Another example of a service 500 could be a financial service application such as banking or brokerage application that allows a user to perform financial transactions.

The service 500 receives the service request along with a verifiable credential 112 that is purported to have a delegation attribute for the service and asks the verifier computing environment 106 to verify that the second user is properly authorized to use the service 500, in sequence 2. In turn, the verifier computing environment 106 obtains the verifiable credential 112 of the second user from the service 500 and verifies the presented data/proof by checking decentralized identity network to ensure the digital signatures of the issuer and holder are valid and that the credentials have not been revoked, as shown in sequences 3-5. For example, a verifier may check a decentralized identifier (DID) ledger 110 to authenticate the respective issuer and holder and check a revocation ledger 114 to determine whether a delegation relationship within a verifiable credential 112 is still valid. In sequence 6, the verifier 106 responds to the requesting entity (*e.g.*, service 600) with a verification response indicating whether the delegation attribute value is verified.

Additionally, the verifier computing environment 106 can obtain the DID of the first user (delegator) and/or issuer of the verifiable credential 112 and use it to confirm that the first user accepts or confirms the delegation attribute value, in a similar manner as those previously described above. In various embodiments, to inform a delegator of use of a delegated right, the verifier computing environment 106 can send a notification message, such as a push notification, to the user device 101 of the delegator user and could ask for authorization to verify its use. Such a scenario may be advantageous for contexts where a verifier has a pre-existing relationship with the delegator and has their contact information. In this type of arrangement, the verifier may be considered to be performing a two-step authorization where in addition to confirming that a delegation attribute in a verifiable credential is valid, an interested user is notified (*e.g*., in real time) and authenticated as authorizing the delegated action. Further, in various embodiments, conditions may be placed on the notification controls so that notifications are triggered for certain specified conditions and not others.

Referring back to FIG. 1, the issuer computing environment 104 and the verifier computing environment 106 can include one or more computing devices that include a processor, a memory, and/or a network interface. For example, the computing devices can be configured to perform computations on behalf of other computing devices or applications. As another example, such computing devices can host and/or provide content to other computing devices in response to requests for content.

Moreover, the issuer computing environment 104 and the verifier computing environment 106 can employ a plurality of computing devices that can be arranged in one or more server banks or computer banks or other arrangements. Such computing devices can be located in a single installation or can be distributed among many different geographical locations. For example, the issuer computing environment 104 and the verifier computing environment 106 can include a plurality of computing devices that together can include a hosted computing resource, a grid computing resource or any other distributed computing arrangement. In some cases, the issuer computing environment 104 and the verifier computing environment 106 can correspond to an elastic computing resource where the allotted capacity of processing, network, storage, or other computing-related resources can vary over time.

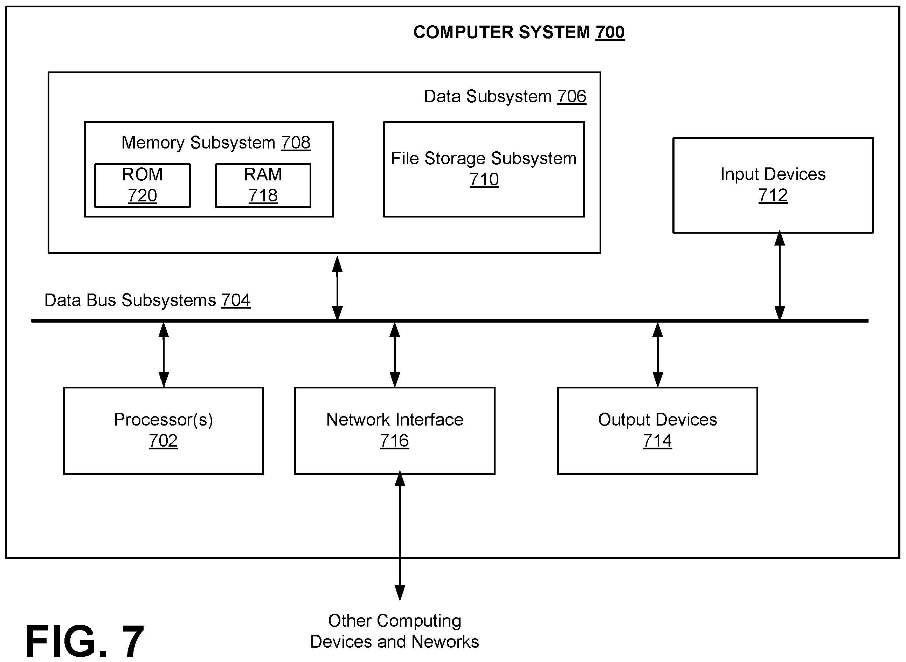

Referring now to FIG. 7, a block diagram of an example computer system 700 is depicted according to certain embodiments. Computer system 700 can be used to implement various computing devices of the verifiable credential management system, including user device 101, issuer computing environment 104, verifier computing environment 106, *etc.* As shown in FIG. 7, computer system 700 includes one or more processors 702 that communicate with a number of peripheral devices via a data bus subsystem or interface 704. These peripheral devices include data subsystem 706 (comprising memory subsystem 708 and file storage subsystem 710), user interface input devices 712, user interface output devices 714, and network interface subsystem 716.

Data bus subsystem 704 can provide a mechanism that enables the various components and subsystems of computer system 700 to communicate with each other as intended. Although data bus subsystem 704 is shown schematically as a single bus, alternative embodiments of the data bus subsystem can utilize multiple busses.

Network interface subsystem 716 can serve as an interface for communicating data between computer system 700 and other computer systems or networks; *e.g.,* nodes in a blockchain network. Embodiments of network interface subsystem 716 can include, *e.g.,* an Ethernet card, a Wi-Fi and/or cellular adapter, digital subscriber line (DSL) units, and/or the like.

User interface input devices 712 can include a keyboard, pointing devices (*e.g.*, mouse, trackball, touchpad, *etc.*), a touchscreen incorporated into a display, audio input devices (*e.g.*, voice recognition systems, microphones, *etc.*) and other types of input devices. In general, use of the term "input device" is intended to include all possible types of devices and mechanisms for inputting information into computer system 700.

User interface output devices 714 can include a display subsystem, a printer, or non-visual displays such as audio output devices, *etc.* The display subsystem can be, *e.g.,* a flat-panel device such as a liquid crystal display (LCD) or organic light-emitting diode (OLED) display. In general, use of the term "output device" is intended to include all possible types of devices and mechanisms for outputting information from computer system 700.

Data subsystem 706 includes memory subsystem 708 and file/disk storage subsystem 710 represent non-transitory computer-readable storage media that can store program code and/or data, which when executed by processor 702, can cause processor 702 to perform operations in accordance with embodiments of the present disclosure.

Memory subsystem 708 includes a number of memories including main random access memory (RAM) 718 for storage of instructions and data during program execution and read-only memory (ROM) 720 in which fixed instructions are stored. File storage subsystem 710 can provide persistent (*i.e*., non-volatile) storage for program and data files, and can include a magnetic or solid-state hard disk drive, an optical drive along with associated removable media (*e.g*., CD-ROM, DVD, Blu-Ray, *etc.*), a removable flash memory-based drive or card, and/or other types of storage media known in the art. Memory can include both volatile and nonvolatile memory and data storage components.

In addition, a processor can represent multiple processors and/or multiple processor cores, and the one or more memory devices can represent multiple memories that operate in parallel processing circuits, respectively. In such a case, a local interface can be an appropriate network that facilitates communication between any two of the multiple processors or between any processor and any of the memory devices. The local interface can include additional systems designed to coordinate this communication, including, for example, performing load balancing. The processor can be electric or of some other available construction.

It should be appreciated that computer system 700 is illustrative and many other configurations having more or fewer components than system 700 are possible. These and other variations, modifications, additions, and improvements may fall within the scope of the appended claims(s). As used in the description herein and throughout the claims that follow, "a," "an," and "the" includes plural references unless the context clearly dictates otherwise. Also, as used in the description herein and throughout the claims that follow, the meaning of "in" includes "in" and "on" unless the context clearly dictates otherwise.

Illustrative examples of various embodiments of the present disclosure are set forth below. Additional embodiments of the present disclosure are discussed in the preceding paragraphs. Accordingly, the scope of the present disclosure should not be construed as being limited to the following clauses:
Clause 1. A system, comprising a computing device comprising a processor and a memory; and machine-readable instructions stored in the memory that, when executed by the processor, cause the computing device to at least: receive a request from a user device of a first user to issue a delegation verifiable credential that indicates that the first user has a delegation relationship with a second user; request confirmation from the second user of the delegation relationship with the first user; after receiving confirmation, issue a new verifiable credential for the first user, wherein the new verifiable credential includes a delegation attribute value that describes the delegation relationship between the first user and the second user; and transmit the new verifiable credential to the user device of the first user.
Clause 2. The system of clause 1, wherein the delegation relationship identifies that the first user has a delegator role.
Clause 3. The system of clause 1, wherein the delegation relationship identifies that the first user has a delegatee role.
Clause 4. The system of clauses 1-3, wherein the new verifiable credential includes a delegation expiry attribute value that specifies a date or duration upon which the delegation relationship expires.
Clause 5. The system of clauses 1-4, wherein the machine-readable instructions further cause the computing device to: receive a request from the user device of a first user to issue a new delegation verifiable credential that indicates that the first user has a delegation relationship with a third user; revoke the new verifiable credential for the first user responsive to receiving the request for issuing a new delegation verifiable credential; and issue another new verifiable credential for the first user, wherein the other new verifiable credential includes a delegation attribute value that describes the delegation relationship between the first user and the third user.
Clause 6. The system of clauses 1-5, wherein the machine-readable instructions further cause the computing device to: receive a revocation request from the user device of the first user to remove the delegation attribute value from the new verifiable credential for the first user; issue an updated verifiable credential for the first user, wherein the updated verifiable credential does not include the delegation attribute value; and notify a user device of the second user that the delegation attribute value has been removed from the verifiable credential for the first user.
Clause 7. The system of clauses 1-6, wherein the machine-readable instructions further cause the computing device to: issue a decentralized identifier for the first user; and issue a decentralized identifier for the second user.
Clause 8. The system of clauses 1-5, wherein the machine-readable instructions further cause the computing device to: receive a revocation request from the user device of the first user to remove the delegation attribute value from the new verifiable credential for the first user; issuing a first updated verifiable credential for the first user, wherein the first updated verifiable credential does not include the delegation attribute value; and issuing a second updated verifiable credential for the second user, wherein the second updated verifiable credential does not include the delegation attribute value.
Clause 9. A method performed by a computing device, comprising receiving a request from a user device of a first user to perform an action on behalf of a second user; receiving a verifiable credential of the first user that includes a delegation attribute value that describes a delegation relationship between the first user and the second user, wherein the delegation relationship specifies the requested action; verifying a digital signature of an issuer of the verifiable credential; and notifying the second user that the first user is attempting to carry out an action specified in the delegation relationship; asking the second user to verify that the first user is authorized to carry out the requested action; and responsive to receiving verification from the second user and verifying the digital signature of the issuer, confirming that the first user is verified to perform the requested action.
Clause 10. The method of clause 9, wherein a notification is sent to the second user regarding the requested action in response to occurrence of a specified condition specified in the verifiable credential.
Clause 11. The method of clauses 9-10, wherein the delegation relationship identifies that the first user has a delegator role and the second user has a delegatee role.
Clause 12. The method of clauses 9-11, wherein the verifiable credential includes a delegation expiry attribute value that specifies a date or duration upon which the delegation relationship expires.
Clause 13. A non-transitory, computer-readable medium comprising machine-readable instructions that, when executed by a processor of a computing device, cause the computing device to at least receive a request from a user device of a first user to issue a delegation verifiable credential that indicates that the first user has a delegation relationship with a second user; request confirmation from the second user of the delegation relationship with the first user; after receiving confirmation, issue a new verifiable credential for the first user, wherein the new verifiable credential includes a delegation attribute value that describes the delegation relationship between the first user and the second user; and transmit the new verifiable credential to the user device of the first user.
Clause 14. The non-transitory, computer-readable medium of clause 13, wherein the delegation relationship identifies that the first user has a delegator role.
Clause 15. The non-transitory, computer-readable medium of clause 13, wherein the delegation relationship identifies that the first user has a delegatee role.
Clause 16. The non-transitory, computer-readable medium of clauses 13-15, wherein the new verifiable credential includes a delegation expiry attribute value that specifies a date or duration upon which the delegation relationship expires.
Clause 17. The non-transitory, computer-readable medium of clauses 13-16, wherein the machine-readable instructions further cause the computing device to receive a request from the user device of a first user to issue a new delegation verifiable credential that indicates that the first user has a delegation relationship with a third user; revoke the new verifiable credential for the first user responsive to receiving the request for issuing a new delegation verifiable credential; and issue an updated verifiable credential for the first user, wherein the updated verifiable credential includes a delegation attribute value that describes the delegation relationship between the first user and the third user.
Clause 18. The non-transitory, computer-readable medium of clauses 13-17, wherein the machine-readable instructions further cause the computing device to receive a revocation request from the user device of the first user to remove the delegation attribute value from the new verifiable credential for the first user; issue an updated verifiable credential for the first user, wherein the updated verifiable credential does not include the delegation attribute value; and notify a user device of the second user that the delegation attribute value has been removed from the verifiable credential for the first user.
Clause 19. The non-transitory, computer-readable medium of clauses 13-18, wherein the machine-readable instructions further cause the computing device to issue a decentralized identifier for the first user; and issue a decentralized identifier for the second user.
Clause 20. The non-transitory, computer-readable medium of clauses 13-17, wherein the machine-readable instructions further cause the computing device to receive a revocation request from the user device of the first user to remove the delegation attribute value from the new verifiable credential for the first user; issuing a first updated verifiable credential for the first user, wherein the first updated verifiable credential does not include the delegation attribute value; and issuing a second updated verifiable credential for the second user, wherein the second updated verifiable credential does not include the delegation attribute value.

The components described herein can be embodied in the form of hardware, as software components that are executable by hardware, or as a combination of software and hardware. If embodied as hardware, the components described herein can be implemented as a circuit or state machine that employs any suitable hardware technology. This hardware technology can include one or more microprocessors, discrete logic circuits having logic gates for implementing various logic functions upon an application of one or more data signals, application specific integrated circuits (ASICs) having appropriate logic gates, programmable logic devices (*e.g*., field-programmable gate array (FPGAs), and complex programmable logic devices (CPLDs)).

In this respect, the term "executable" means a program file that is in a form that can ultimately be run by the processor. Examples of executable programs can be, for example, a compiled program that can be translated into machine code in a format that can be loaded into a random access portion of one or more of the memory devices and run by the processor, code that can be expressed in a format such as object code that is capable of being loaded into a random access portion of the one or more memory devices and executed by the processor, or code that can be interpreted by another executable program to generate instructions in a random access portion of the memory devices to be executed by the processor. An executable program can be stored in any portion or component of the memory devices including, for example, random access memory (RAM), read-only memory (ROM), hard drive, solid-state drive, USB flash drive, memory card, optical disc such as compact disc (CD) or digital versatile disc (DVD), floppy disk, magnetic tape, or other memory components.

The sequence diagrams show the functionality and operation of an implementation of portions of the various embodiments of the present disclosure. If embodied in software, each block can represent a module, segment, or portion of code that includes program instructions to implement the specified logical function(s). The program instructions can be embodied in the form of source code that includes human-readable statements written in a programming language or machine code that includes numerical instructions recognizable by a suitable execution system such as a processor in a computer system. The machine code can be converted from the source code through various processes. For example, the machine code can be generated from the source code with a compiler prior to execution of the corresponding application. As another example, the machine code can be generated from the source code concurrently with execution with an interpreter. Other approaches can also be used. If embodied in hardware, each block can represent a circuit or a number of interconnected circuits to implement the specified logical function or functions.

Although the sequence diagrams show a specific order of execution, it is understood that the order of execution can differ from that which is depicted. For example, the order of execution of two or more blocks can be scrambled relative to the order shown. Also, two or more blocks shown in succession can be executed concurrently or with partial concurrence. Further, in some embodiments, one or more of the blocks shown in the sequence diagrams can be skipped or omitted. In addition, any number of counters, state variables, warning semaphores, or messages might be added to the logical flow described herein, for purposes of enhanced utility, accounting, performance measurement, or providing troubleshooting aids, *etc.* It is understood that all such variations are within the scope of the present disclosure.

Further, any logic or application described herein can be implemented and structured in a variety of ways. For example, one or more applications can be implemented as modules or components of a single application. Further, one or more applications described herein can be executed in shared or separate computing devices or a combination thereof. For example, a plurality of the applications described herein can execute in the same computing device, or in multiple computing devices.

Also, any logic or application described herein that includes software or code can be embodied in any non-transitory computer-readable medium for use by or in connection with an instruction execution system such as a processor in a computer system or other system. In this sense, the logic can include statements including instructions and declarations that can be fetched from the computer-readable medium and executed by the instruction execution system. In the context of the present disclosure, a "computer-readable medium" can be any medium that can contain, store, or maintain the logic or application described herein for use by or in connection with the instruction execution system. Moreover, a collection of distributed computer-readable media located across a plurality of computing devices (*e.g*., storage area networks or distributed or clustered filesystems or databases) may also be collectively considered as a single non-transitory computer-readable medium.

The computer-readable medium can include any one of many physical media such as magnetic, optical, or semiconductor media. More specific examples of a suitable computer-readable medium would include, but are not limited to, magnetic tapes, magnetic floppy diskettes, magnetic hard drives, memory cards, solid-state drives, USB flash drives, or optical discs. Also, the computer-readable medium can be a random-access memory (RAM) including static random-access memory (SRAM) and dynamic random-access memory (DRAM), or magnetic random-access memory (MRAM). In addition, the computer-readable medium can be a read-only memory (ROM), a programmable read-only memory (PROM), an erasable programmable read-only memory (EPROM), an electrically erasable programmable read-only memory (EEPROM), or other type of memory device.

Disjunctive language such as the phrase "at least one of X, Y, or Z," unless specifically stated otherwise, is otherwise understood with the context as used in general to present that an item, term, *etc.,* can be either X, Y, or Z, or any combination thereof (*e.g.*, X; Y; Z; X or Y; X or Z; Y or Z; X, Y, or Z; *etc.*)*.* Thus, such disjunctive language is not generally intended to, and should not, imply that certain embodiments require at least one of X, at least one of Y, or at least one of Z to each be present.

It should be emphasized that the above-described embodiments of the present disclosure are merely possible examples of implementations set forth for a clear understanding of the principles of the disclosure. Many variations and modifications can be made to the above-described embodiments without departing substantially from the principles of the disclosure. All such modifications and variations are intended to be included herein within the scope of this disclosure and protected by the following claims.

## Claims

1. Therefore, the following is claimed: 1. A system, comprising:
a computing device comprising a processor and a memory; and
machine-readable instructions stored in the memory that, when executed by the processor, cause the computing device to at least:
receive a request from a user device of a first user to issue a delegation verifiable credential that indicates that the first user has a delegation relationship with a second user;
request confirmation from the second user of the delegation relationship with the first user;
after receiving confirmation, issue a new verifiable credential for the first user, wherein the new verifiable credential includes a delegation attribute value that describes the delegation relationship between the first user and the second user; and
transmit the new verifiable credential to the user device of the first user.

2. The system of claim 1, wherein the delegation relationship identifies that the first user has a delegator role.

3. The system of claim 1, wherein the delegation relationship identifies that the first user has a delegatee role.

4. The system of claims 1-3, wherein the new verifiable credential includes a delegation expiry attribute value that specifies a date or duration upon which the delegation relationship expires.

5. The system of claims 1-4, wherein the machine-readable instructions further cause the computing device to:
receive a request from the user device of a first user to issue a new delegation verifiable credential that indicates that the first user has a delegation relationship with a third user;
revoke the new verifiable credential for the first user responsive to receiving the request for issuing a new delegation verifiable credential; and
issue another new verifiable credential for the first user, wherein the other new verifiable credential includes a delegation attribute value that describes the delegation relationship between the first user and the third user.

6. The system of claims 1-5, wherein the machine-readable instructions further cause the computing device to:
receive a revocation request from the user device of the first user to remove the delegation attribute value from the new verifiable credential for the first user;
issue an updated verifiable credential for the first user, wherein the updated verifiable credential does not include the delegation attribute value; and
notify a user device of the second user that the delegation attribute value has been removed from the verifiable credential for the first user.

7. The system of claims 1-6, wherein the machine-readable instructions further cause the computing device to:
issue a decentralized identifier for the first user; and
issue a decentralized identifier for the second user.

8. The system of claims 1-5, wherein the machine-readable instructions further cause the computing device to:
receive a revocation request from the user device of the first user to remove the delegation attribute value from the new verifiable credential for the first user;
issuing a first updated verifiable credential for the first user, wherein the first updated verifiable credential does not include the delegation attribute value; and
issuing a second updated verifiable credential for the second user, wherein the second updated verifiable credential does not include the delegation attribute value.

9. A method performed by a computing device, comprising:
receiving a request from a user device of a first user to perform an action on behalf of a second user;
receiving a verifiable credential of the first user that includes a delegation attribute value that describes a delegation relationship between the first user and the second user, wherein the delegation relationship specifies the requested action;
verifying a digital signature of an issuer of the verifiable credential; and
notifying the second user that the first user is attempting to carry out an action specified in the delegation relationship;
asking the second user to verify that the first user is authorized to carry out the requested action; and
responsive to receiving verification from the second user and verifying the digital signature of the issuer, confirming that the first user is verified to perform the requested action.

10. The method of claim 9, wherein a notification is sent to the second user regarding the requested action in response to occurrence of a specified condition specified in the verifiable credential.

11. The method of claims 9-10, wherein the delegation relationship identifies that the first user has a delegator role and the second user has a delegatee role.

12. The method of claims 9-11, wherein the verifiable credential includes a delegation expiry attribute value that specifies a date or duration upon which the delegation relationship expires.

13. A computer-readable medium comprising machine-readable instructions that, when executed by a processor of a computing device, cause the computing device to at least:
receive a request from a user device of a first user to issue a delegation verifiable credential that indicates that the first user has a delegation relationship with a second user;
request confirmation from the second user of the delegation relationship with the first user;
after receiving confirmation, issue a new verifiable credential for the first user, wherein the new verifiable credential includes a delegation attribute value that describes the delegation relationship between the first user and the second user; and
transmit the new verifiable credential to the user device of the first user.

14. The computer-readable medium of claim 13, wherein the delegation relationship identifies that the first user has a delegator role.

15. The computer-readable medium of claim 13, wherein the delegation relationship identifies that the first user has a delegatee role.
